# EUROPEAN PATENT SPECIFICATION

(11) **EP 0 539 837 B1**
(45) Date of publication and mention of the grant of the patent: **25.01.1995**
(21) Application number: 92117871.1
(22) Date of filing: 20.10.1992
(51) Int. Cl.: B23Q 7/04

(54) **Vertical lathe**
Vertikale Drehbank
Tour vertical

(30) Priority: 31.10.1991 IT BO910404
(43) Date of publication of application: 05.05.1993
(73) Proprietor: MINGANTI S.p.A., I-40128 Bologna (IT)
(72) Inventor: Tommasini, Gualtiero Gianni, I-40132 Bologna (IT); Sammartin, Roberto, I-35030 Selvazzano Dentro (IT)
(74) Representative: Porsia, Bruno

(56) References cited:
- WO-A-91/14534
- DE-U- 8 524 785
- GB-A- 2 095 138

## Description

The invention relates to vertical lathes designed to perform loading of the workpiece to be machined and unloading of the machined workpiece, according to the pre-characterizing part of claim 1.

A boring machine of this kind is known from the document GB-A-2.095.138. This machine comprises two chucks which are arranged at a distance from each other and are each intended for receiving a workpiece to be machined, and for rotating the to-be-machined workpiece around a vertical axis for machining. Associated with each of the chucks are means for supporting, positioning and transferring the workpieces, said means being arranged so as to provide a station for loading a workpiece to be machined and a station for receiving and unloading the machined workpiece, these stations being horizontally spaced apart from the associated chuck and being located on opposite sides of the chuck at the same distance from the axis thereof. The unloading station which is associated with one chuck, is the station for loading the loading station associated with the other chuck. Also associated with each chuck is a tool-carrying or cross slide which is movable in both of the vertical and horizontal directions between the loading station and the unloading station, as well as above the associated chuck, and this slide can take an intermediate position for the workpiece located on the chuck to be machined. Mounted on each tool-carrying or cross slide are manipulator means designed to pick up from the loading station a workpiece to be machined and to insert it into the associated chuck, as well as to pick up the machined workpiece and locate it on the unloading station.

In the machine as known from the document GB-A-2.095. 138, a revolving turret is mounted on each tool-carrying or cross slide, and a plurality of tools are mounted on each turret in an angularly spaced relationship around the axis thereof. One single manipulator for workpieces to be transferred from the loading station to the associated chuck and from the chuck to the associated unloading station, is mounted on the turret of the respective tool carrying or cross slide instead of a tool, and is moved into the various pick-up and lay-down positions by causing the tool-carrying turret to be rotated.

The invention proposes to overcome in vertical lathes of the aforesaid kind, the problem of feeding and unloading workpieces by means of a solution which is more simple and economical than the known solutions.

This object is achieved by the combination of the following features according to the characterizing part of claim 1:
- the manipulator means comprise two manipulators which are attached directly to the same, single tool-carrying or cross slide at opposite ends thereof;
- the reciprocal distance between the two manipulators is equal to the distance between the loading and unloading stations and the axis of the chuck;
- the tool-carrying or cross slide is horizontally movable into two end positions, and in one end position one manipulator is located in the loading station for picking up a workpiece to be machined, and the other manipulator is located over the chuck for picking up the machined workpiece, while in the other end position of the slide the said one manipulator is located over the chuck for inserting therein-to the workpiece to be machined, and the said other manipulator is located in the unloading station for laying down the machined workpiece.

Further characteristic features of the invention and the advantages resulting therefrom will emerge from the following description of a possible embodiment of the said invention, illustrated purely by way of a non-limiting example in the figures of the three accompanying illustrative plates, in which:

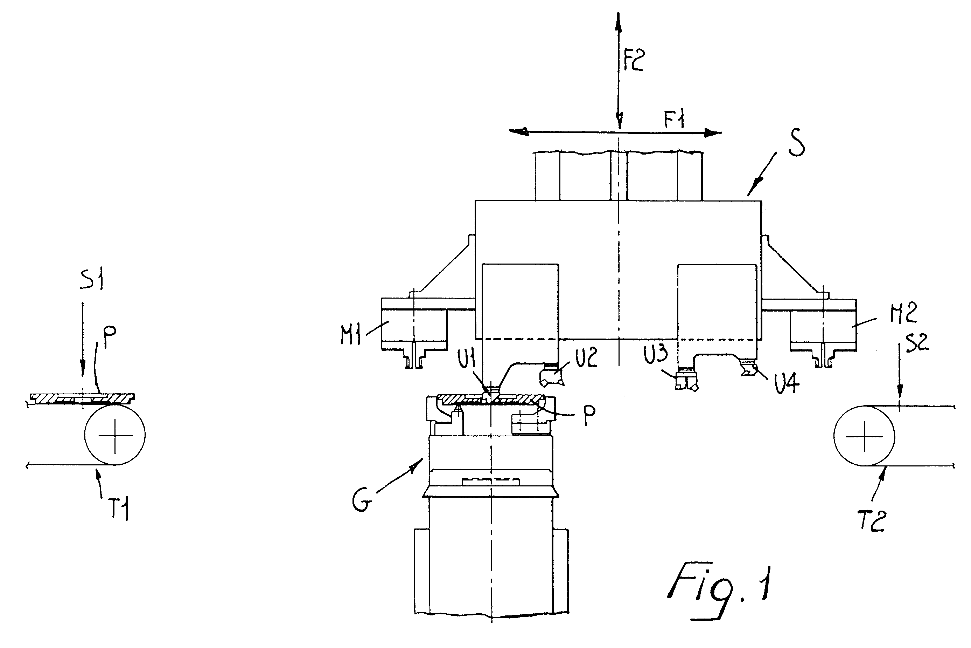

Figs 1, 2 and 3 are front and schematic views of a tool-carrying or cross slide of a vertical lathe provided with manipulators and shown, respectively, during certain stages of machining of a workpiece and during unloading and feeding of the workpiece itself from and to the chuck.

In Figure 1, S denotes the slide which in the example in question carries four tool stations U1, U2, U3 and U4 and which, by means of guides and slides of the known type, not shown, is able to perform precise displacements which are of significant amplitude also, in both the horizontal and vertical direction, as indicated by the arrows F1-F2. By means of suitable displacements of the slide in the horizontal and vertical direction, the tool stations are progressively used for machining the workpiece P located on the carousel or chuck G with a vertical axis.

According to the invention, the possibility of horizontal displacement of the slide S is adapted, in terms of amplitude, to the new requirements and, if necessary, the means which control the horizontal displacements of the slide itself are programmed so as to perform also rapid approach movements.

On the opposite sides of the slide S there are mounted respective manipulators M1, M2, or grippers, able to grip one of the workpieces P to be machined and able to operate automatically in the manner described below.

On the opposite sides of the lathe are arranged two conveyors T1, T2 equipped with means for supporting the workpieces P and able to perform precise movements such that the said supporting means are precisely positioned in the stations S1 and S2 which have a precise spatial location and are located at the same distance from the axis of the chuck G. This distance is the same as the mutual distance between the manipulators M1, M2. When the lathe is machining a workpiece P, a workpiece to be machined is present in the station S1, while the station S2 is empty, waiting to receive the machined workpiece from the lathe.

It is understood that, in place of the conveyors TI and T2, other known means may be provided, for example a rotating, oscillating or other kind of system.

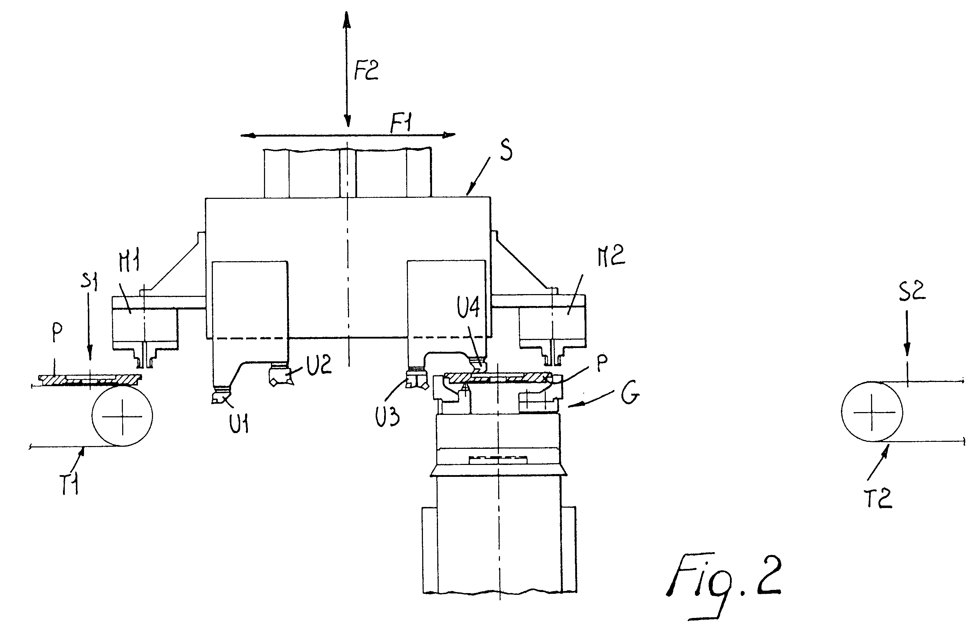

During machining of the workpiece located on the chuck G of the lathe, the slide S moves towards the loading conveyor T1, as can be seen from the sequence shown in Figures 1 and 2.

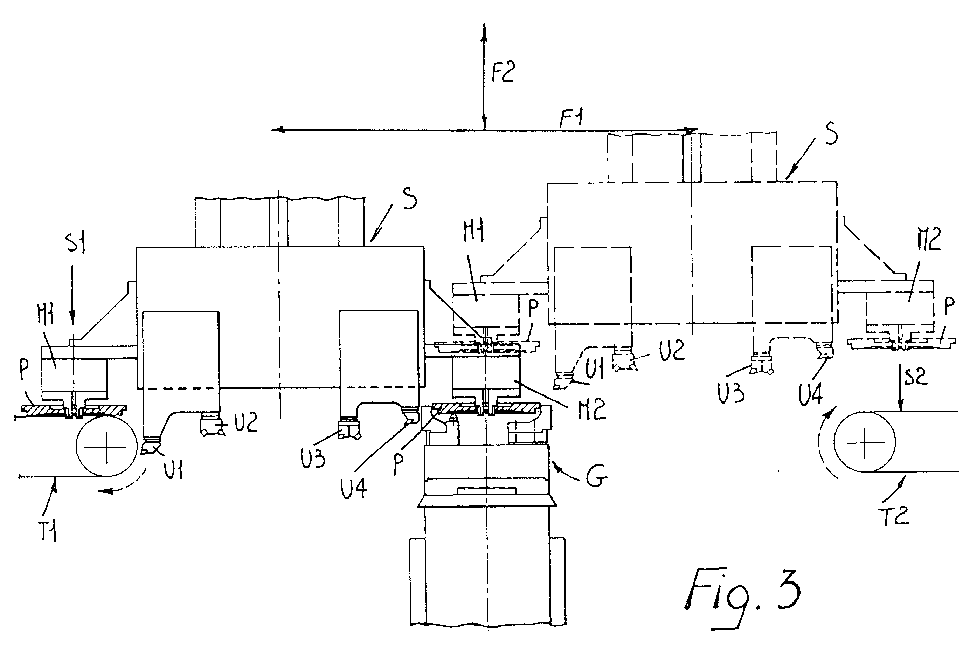

After machining of the workpiece has been completed, the slide S continues its displacement to the left and arranges the manipulator M2 on the machined workpiece, while the manipulator M1 is in the station S1. With successive downward and upward movements of the slide S, the manipulator M2 grips and extracts the machined workpiece from the chuck G, while the manipulator M1 grips and raises the workpiece P to be machined from the station S1, as shown in continuous lines in Figure 3.

Subsequently, with initially fast and then slow displacements of the slide S in the horizontal and vertical direction, the latter moves into the position shown in broken lines in Figure 3, such that the manipulator M1 inserts the new workpiece P into the chuck G and the manipulator M2 transfers the already machined workpiece into the station S2 from where the unit T2 removes it and, if necessary, transfers it to a subsequent vertical lathe.

The considerable constructional simplification of the solution described herein is obvious, along with the advantages in terms of efficiency which it brings and the simplicity of implementation of the same, as well as the drastic reduction in maintenance and general costs involved compared to the current feeding and unloading systems mentioned in the introduction of the present description.

It is understood that the manipulators M1 and M2 may be produced in any suitable manner, for example also so as to modify the orientation of the workpiece during loading and/or unloading.

If necessary, also, in particular during handling of small or medium-size workpieces, the manipulators may be mounted on the slide or slides S with the possibility of performing on the latter independent and precise displacements on one or on several axes.

If the lathe is equipped with two tool-carrying or cross slides S, the manipulator M1 will be mounted on one slide and the manipulator M2 will be mounted on another slide.

## Claims

1. Vertical lathe designed to perform loading of the workpiece to be machined and unloading of the machined workpiece, comprising:
a) a chuck (G) for receiving a workpiece to be machined and for the to-be-machined workpiece to be rotated around a vertical axis for machining;
b) known means (T1, T2) for supporting, positioning and transferring the workpieces (P), said means being arranged so as to provide a station (S1) for loading the workpiece to be machined and a station (S2) for receiving and unloading the machined workpiece, these stations (S1, S2) being horizontally spaced apart from said chuck (G) and being located on opposite sides of the chuck (G) at the same distance from the axis thereof;
c) a tool-carrying or cross slide (S) which is movable in both of the vertical and horizontal directions between the loading station (S1) and the unloading station (S2), as well as above the chuck (G), and this cross slide can take an intermediate position for the workpiece located on the the chuck (G) to be machined;
d) manipulator means (M1, M2) designed to grip the workpiece to be machined and the machined workpiece, are mounted on the tool-carrying or cross slide (S) so as to pick up from the loading station (S1) a workpiece to be machined and to insert it into the chuck (G), and as to pick up from the chuck (G) the machined workpiece and locate it on the unloading station (S2),
characterized by the combination of the following features:
e) the manipulator means comprise two manipulators (M1, M2) which are attached directly to the same, single tool-carrying or cross slide (S) at opposite ends thereof;
f) the reciprocal distance between the two manipulators (M1, M2) is equal to the distance between each of the loading and unloading stations (S1, S2) and the axis of the chuck (G);
g) the tool-carrying or cross slide (S) is horizontally movable into two end positions, and in one end position one manipulator (M1) is located in the loading station (S1) for picking up a workpiece to be machined, and the other manipulator (M2) is located over the chuck (G) for picking up the machined workpiece, while in the other end position of the slide (S) the said one manipulator (M1) is located over the chuck (G) for inserting thereinto the workpiece to be machined, and the said other manipulator (M2) is located in the unloading station (S2) for laying down the machined workpiece.

2. Vertical lathe according to claim 1, characterized in that between the two manipulators (M1, M2) a plurality of tool stations (U1, U2, U3, and U4) are mounted on the tool-carrying or cross slide (S), which are progressively used in corresponding intermediate positions of the slide (S) for the workpiece located on the chuck (G) to be machined.

## Patentansprüche

1. Vertikale Drehbank, mit der ein Beladen eines zu bearbeitenden Werkstücks und ein Entladen des bearbeitenden Werkstücks möglich ist, mit
a) einem Futter (G) zur Aufnahme eines zu bearbeitenden Werkstücks, das zum Bearbeiten um eine vertikale Achse gedreht werden kann,
b) bekannten Mitteln (T1, T2) zum Tragen, Positionieren und Bewegen der Werkstücke (P), wobei die Mittel so angeordnet sind, daß eine Station (S1) zum Beladen des zu bearbeitenden Werkstücks vorgesehen ist und eine Station (S2) für die Aufnahme und zum Entladen des bearbeiteten Werkstücks, wobei diese Stationen (S1, S2) horizontal vom Futter (G) beabstandet angeordnet sind und sich an gegenüberliegenden Seiten des Futters (G) befinden, und zwar gleich weit beabstandet von der Achse des Futters,
c) einem Schlitten (S), der wenigstens ein Werkzeug trägt oder der als Querschlitten ausgebildet ist, der in horizontaler und in vertikaler Richtung zwischen der Beladestation (S1) und der Entladestation (S2) beweglich ist, und auch über das Futter (G), wobei der Schlitten eine Zwischenposition für das zu bearbeitende Werkstück einnehmen kann, das sich am Futter (G) befindet,
d) Manipulatormitteln (M1, M2), die das zu bearbeitende Werkstück und das bearbeitete Werkstück greifen können, wobei die Manipulatormittel am Schlitten (S) befestigt sind, so daß sie ein zu bearbeitendes Werkstück von der Beladestation (S1) greifen und in das Futter (G) einsetzen können, und so, daß das beareitete Werkstück vom Futter (G) gegriffen und zur Entladestation (S2) gebracht werden kann,
**dadurch gekennzeichnet,**
daß eine Kombination der folgenden Merkmale vorgesehen ist:
e) das Manipulatormittel weist zwei Manipulatoren (M1, M2) auf, die direkt an dem einzigen Schlitten (S) befestigt sind, und zwar an gegenüberliegenden Enden des Schlittens,
f) der jeweilige Abstand zwischen den beiden Manipulatoren (M1, M2) ist gleich dem Abstand zwischen der Beladestation bzw. der Entladestation (S1, S2) und der Achse des Futters (G),
g) der Schlitten (S) ist horizontal in zwei Endpositionen beweglich, wobei in einer Endposition ein Manipulator (M1) sich in der Beladestation (S1) befindet, um ein zu bearbeitendes Werkstück zu greifen, und der andere Manipulator (M2) sich über dem Futter (G) befindet, um das bearbeitete Werkstück zu greifen, während in der anderen Endposition des Schlittens (S) der eine Manipulator (M1) sich über dem Futter (G) befindet, um das zu bearbeitende Werkstück in das Futter einzusetzen und der andere Manipulator (M2) sich in der Entladestation (S2) befindet, um das bearbeitete Werkstück abzulegen.

2. Drehbank nach Anspruch 1,
**dadurch gekennzeichnet,**
daß zwischen den beiden Manipulatoren (M1, M2) eine Vielzahl von Werkzeugstationen (U1, U2, U3, U4) am Schlitten (S) befestigt sind, die nacheinander in entsprechenden Zwischenpositionen des Schlittens (S) verwendet werden, damit das am Futter (G) befindliche Werkstück bearbeitet werden kann.

## Revendications

1. Tour vertical conçu pour effectuer le chargement de la pièce à usiner et le déchargement de la pièce usinée, comprenant :
a) un mandrin de serrage (G) destiné à recevoir la pièce à usiner et à faire tourner la pièce de travail devant être usinée par rapport à un axe vertical pour l'usiner ;
b) des moyens (TI, T2) connus destinés à supporter, à mettre en position et à transférer la pièce (P), ces moyens étant disposés de manière à ménager un poste (S1) de chargement de la pièce à usiner et un poste (S2) de réception et de déchargement de la pièce usinée, ces postes (S1, S2) étant à distance horizontalement du mandrin de serrage (G) et équidistants sur les côtés opposés du mandrin de serrage (G) de son axe;
c) un porte-outils ou chariot transversal (S) pouvant se déplacer suivant les deux directions verticale et horizontale entre le poste de chargement (S1) et le poste de déchargement (S2), ainsi qu'au-dessus du mandrin de serrage (G), et ce chariot transversal peut prendre une position intermédiaire afin que la pièce située sur le mandrin de serrage (G) puisse être usinée ;
d) des moyens de manipulation (M1, M2) conçus pour saisir la pièce à usiner et la pièce usinée, qui sont montés sur le porte-outils ou chariot transversal (S), afin d'enlever une pièce à usiner du poste de chargement (S1) et afin d'enlever la pièce usinée du mandrin de serrage et de la placer sur le poste de déchargement (S2),
caractérisé par la combinaison de caractéristiques suivantes:
e) les moyens de manipulation comprennent deux manipulateurs (M1, M2) qui sont fixés directement au même et unique porte-outil ou chariot transversal (S) à ses extrémités opposées ;
f) la distance mutuelle entre les deux manipulateurs (M1, M2) est égale à la distance entre chaque poste de chargement et de déchargement (S1, S2) et l'axe du mandrin de serrage (G) ;
g) le porte-outils ou chariot transversal (S) peut être déplacé horizontalement pour venir en deux positions extrêmes, et en une position extrême l'un des manipulateurs (M1) se trouve dans le poste de chargement (S1) pour saisir la pièce à usiner et l'autre manipulateur (M2) est au-dessus du mandrin de serrage (G) pour saisir la pièce usinée, tandis que dans l'autre position extrême du chariot (S), ledit un manipulateur (M1) est au-dessus du mandrin de serrage (G) pour y insérer la pièce à usiner et ledit autre manipulateur (M2) est dans le poste de déchargement (S2) pour déposer la pièce usinée.

2. Tour vertical selon la revendication 1, caractérisé en ce que entre les deux manipulateurs (M1, M2) sont montés sur le porte-outils ou chariot transversal (S) plusieurs postes d'outils (U1, U2, U3 et U4), qui sont utilisés progressivement dans des positions intermédiaires correspondantes du chariot (S) pour usiner la pièce située sur le mandrin de serrage (G).
